# EUROPÄISCHE PATENTSCHRIFT

(11) **EP 0 669 232 B1**
(45) Veröffentlichungstag und Bekanntmachung des Hinweises auf die Patenterteilung: **22.05.1996**
(21) Anmeldenummer: 94102751.8
(22) Anmeldetag: 24.02.1994
(51) Int. Cl.: B60R 22/18

(54) **Gurtstrammer für Sicherheitsgurte**
Pretensioner for safety belt
Tendeur de ceinture de sécurité

(43) Veröffentlichungstag der Anmeldung: 30.08.1995
(73) Patentinhaber: Rahvaettevôte NORMA, EE-0006 Tallinn (EE)
(72) Erfinder: Teder, Leonid, EE-0029 Tallinn (EE); Ots, Aidu, EE-0038 Tallinn (EE); Vahtra, Riho, EE-0017 Tallinn (EE); Raidaru, Mihkel, EE-0006 Tallinn (EE)
(74) Vertreter: Nix, Frank Arnold, Dr.

(56) Entgegenhaltungen:
- EP-A- 0 305 765
- DE-A- 3 229 304

## Beschreibung

Die vorliegende Erfindung betrifft einen Gurtstrammer für die Sicherheitsgurte von Fahrzeugen, bei welchem eine Strammfeder mittels eines Zugmittels über ein Gesperre mit einem Sicherheitsgurtteil, z.B. einem Gurtschloß, verbunden ist. Ein auf Verzögerungen des Fahrzeugs ansprechender Auslösemechanismus gibt die Strammfeder bei vorbestimmten kritischen Verzögerungswerten des Fahrzeugs mittels eines Hebelsystems frei, so daß der angeschlossene Sicherheitsgurtteil eingezogen wird und die Gurtstrammung stattfindet, wobei das Gesperre eine Zurückbewegung blockiert.

Gurtstrammer dieser Art haben die Aufgabe einen nicht ausreichend festgezogenen Anschnallgurt bei Verzögerungswerten des Fahrzeugs, die für ein unmittelbar bevorstehendes Unfallgeschehen kennzeichnend sind, in kürzester Zeit zu strammen, so daß die zu sichernde Person bereits durch den Gurt fest auf dem Sitz gehalten ist, bevor sie auf Grund der Trägheitskräfte ihres Körpers den Gurt ausziehen oder die Lose des Gurts aufbrauchen kann.

Durch die Strammung des Gurtes wird bei einem Unfall die zu sichernde Person gleichsam an den Sitz angekoppelt, so daß sie von Anfang an an der Verzögerung des Fahrzeugs teilnimmt. Durch die Beseitigung der Gurtlose wird der Weg verringert, den die zu sichernde Person bei einem Unfall sich relativ zum Fahrzeug nach vorn bewegen kann, so daß die Gefahr des Aufschlags mit dem Kopf oder anderen Körperteilen auf das Lenkrad oder die Windschutzscheibe oder andere Fahrzeugteile beseitigt oder jedenfalls erheblich verringert ist.

Als besonders vorteilhaft hat sich die Strammung durch das Herabziehen des Gurtschlosses erwiesen, da bei dieser Art der Strammung sowohl der Beckengurt als auch der Schultergurt gleichzeitig festgezogen werden.

Bei den bekannten Ausführungen der Gurtstrammer bewegt sich der Befestigungsteil des Gurtschlosses bei Auslösung der Strammfeder in einer verzahnt ausgebildeten Nut eines Gesperres (DE 39 37 883, DE 40 13 046, DE 40 20 600). Bei diesen Ausbildungen ist die Steifigkeit der Anordnung nachteilig, welche eine ungünstige Richtung der Kraftbeanspruchung des Gurtschlosses und des Gurtbandes zur Folge haben können.

Es ist weiterhin wichtig, daß die Auslösung der Strammfeder beim ersten Anzeichen eines schweren Unfalls ohne Verzögerung ausgelöst und der Sicherheitsgurt gestrammt wird. Geschieht dies verspätet, so wird der Gurtstrammer seine rettende Wirkung nicht entfalten.

Bei bekannten Gurtstrammern (DE 39 37 883, DE 32 29 304, DE 39 25 570) ist die Auslösevorrichtung so ausgestaltet, daß ein der Kraft der Strammfeder entgegenwirkender Hebelarm die Freigabe unmittelbar durch eine Über-Totpunkt-Bewegung bewirkt, wobei ein sehr großer Widerstand zu überwinden ist. Die dabei auftretenden großen Reibungskräfte können die Auslösezeit erheblich verlängern, was durch verschiedene Herstellungsfehler noch verstärkt werden kann.

Bei der vorstehend genannten Druckschrift DE 32 29 304-A1 ist kein die Kraft des Kraftspeichers reduzierendes Hebelsystem vorhanden. Die Strammfederkraft wirkt in voller Größe auf den Auslösemechanismus. Dieser besteht aus einer Stützrolle, an der der Kraftspeicher angreift, einer ortsfest gelagerten Gegenlagerrolle und einer zwischen diesen als Sperrglied wirkenden Verriegelungsrolle, die im Ruhezustand von einer Steuerrolle gestützt ist und in dieser Position die Strammbewegung der Stützrolle verhindert. Dabei ist die Steuerrolle an einem Steuerhebel so gelagert, daß ihre Achse rechtwinklig und mit Abstand zur Achse der Verriegelungsrolle verläuft, und sie ruht stabil in einer in der Mantelfläche der Verriegelungsrolle umlaufenden Zentriernut. Die zum Verlassen dieser Zentriernut erforderliche Über-Totpunkt-Bewegung stellt die Ansprechempfindlichkeit in Frage.

Zur Verringerung der auf den Auslösemechanismus eines Gurtstrammers wirkenden Kraft ist aus der EP 0 305 765-A2 ein Hebelsystem aus zwei zweiarmigen Hebeln bekannt. Bei diesem Gurtstrammer, der dem Oberbegriff des Anspruchs 1 entspricht, tritt jedoch zwischen dem Schlußhebel und dem dieses im Ruhezustand haltenden und von Fahrzeugverzögerungen in Bewegung versetzten Element eine Gleitreibung auf, so daß aus diesem Grunde die Ansprechempfindlichkeit in Frage gestellt ist.

Aufgabe der Erfindung ist die Schaffung eines Gurtstrammers hoher Ansprechempfindlichkeit, der unter Vermeidung der angeführten Nachteile schnell und zuverlässig auslöst und dabei relativ kostengünstig herzustellen ist.Ferner soll sich der Gurtstrammer flexibel für verschiedene Anordnungsfälle anpassen lassen.

Die Lösung der gestellten Aufgabe ergibt sich aus dem Gegenstand des Anspruchs 1.

Ausgehend von einem Gurtstrammer für Sicherheitsgurte eines Fahrzeugs mit einer als Energiespeicher dienenden gespannten Strammfeder, die bei Überschreitung einer bestimmten Fahrzeugverzögerung mittels eines Auslösemechanismus über ein Hebelsystem auslösbar ist und dabei über ein mit einem Gesperre zusammenwirkenden Zugmittel ein Sicherheitsgurtteil, vorzugsweise das Gurtschloß einzieht, hat der Auslösemechanismus erfindungsgemäß zwei Rotationskörper, vorzugsweise zwei achsparallele Rollen, zwischen welchen ein Sperrglied mit vorzugsweise planparallel ausgebildeten Seitenflächen als Teil eines Stößels verschieblich entgegen der Kraft einer Ansteuerfeder angeordnet ist, wobei die erste Rolle mit ihrer augenliegenden Mantellinie gegen eine parallel zu den Sperrgliedflächen angeordnete ortsfeste Widerlagerfläche abgestützt liegt, und die andere Rolle in einem Ausschnitt am Ende eines Tastarmes des Schlußhebels des Hebelsystems durch die reduzierte Kraft der Strammfeder beaufschlagt liegt, wobei die Druckfläche des Ausschnitts des Tastarms parallel zu den Seitenflächen des Sperrgliedes und zur Widerlagerfläche verläuft und die Beaufschlagungskraft auf diese in gerader Kraftwirkungslinie über die andere Rolle, das Sperrglied und die erste Rolle wirkt, wobei eine Masse bei den Fahrzeugverzögerungen durch ihre Trägheitskraft auf den Stößel entgegen der Wirkung der Ansteuerfeder wirkt und bei Überschreitung der bestimmten Verzögerung das Sperrglied zwischen den Rollen bis zum Verlust seiner abstandshaltenden Wirkung bewegt und die Strammfeder auslöst.

In einer zweckmäßigen Ausbildung hat der Stößel die Gestalt einer C-förmigen Klammer, deren Rückteil in einem Kanal der Halterung verschiebbar geführt ist, dessen einer Schenkel das Sperrglied bildet, und dessen anderer Schenkel einen von der Ansteuerfeder beaufschlagten Fuß darstellt, wobei das andere Ende der Ansteuerfeder sich an einem Fingervorsprung an der Halterung abstützt. Dabei werden die Rollen vorteilhafterweise in Richtung ihrer Achse in Position gehalten durch eine abgewinkelte Begrenzungsklammer, welche am Stößel angebracht ist und die Rollen somit an einem Herausfallen hindert.

Eine besonders vorteilhafte Ausbildung ist es, wenn das Sperrglied als ein kurzer Stab mit rechteckigem Querschnitt ausgebildet ist und der Stößel als eine U-förmige Klammer, deren symmetrische Schenkel an ihren Enden gegenüberliegende rechteckige Öffnungen zur Montage des Sperrgliedes aufweisen, und eine Begrenzungsplatte oberhalb des Sperrglieds vorgesehen ist, wobei die Schenkel die Stirnenden der Rollen überdecken und diese in Position halten.

Die untere Abstützung der Rollen erfolgt bezüglich der ersten Rolle zweckmäßigerweise durch einen Vorsprung der Halterung und bezüglich der anderen Rolle durch die untere Fläche des Ausschnitts des Tastarms.

Die Ansteuerfeder stützt sich mit ihrem einen Ende zweckmäßigerweise gegen einen Vorsprung der Halterung, der einen dieses Ende der Feder in Position haltenden Finger aufweist, und mit ihrem anderen Ende gegen den Stößel.

Die auf die Fahrzeugverzögerung ansprechende Trägheitsmasse ist zweckmäßigerweise an dem einen Arm eines als zweiarmiger Hebel ausgebildeten Massenträgers befestigt, wobei der andere Arm mit dem Stößel in ständiger Berührung steht und der Massenträger mit der Trägheitsmasse in Fahrtrichtung vor der Halterung, also bei Betrachtung in Richtung der Fahrzeugquerachse neben der Halterung angeordnet ist.

Damit bei den Auslenkungen des Stößels die zwischen dem Tastarm und dem Sperrglied gelegene Rolle bei Überschreiten der kritischen Verzögerung und damit des Bewegungsweges des Sperrgliedes ihre Abstützung zuerst am Sperrglied verliert, ist die obere Kante des Ausschnitts des Tastarms in einer größeren Entfernung von der Kraftwirkungslinie in deren Ausgangslage gelegen als die Entfernung der unteren Fläche des Sperrgliedes von der Kraftwirkungslinie in deren Ausgangslage.

Das mit dem Zugmittel zusammenwirkende Gesperre ist zweckmäßigerweise eine von dem Zugmittel umschlungene Seilscheibe, welche mit wenigstens einer Zahnscheibe fest verbunden ist, die mit einer federbeaufschlagten Sperrklinke derart zusammenwirkt, daß eine Drehung nur im Sinne des Einziehens des Zugmittels möglich ist.

Dabei ist das Zugmittel zweckmäßigerweise ein aus zwei Abschnitten bestehendes Seil, nämlich einem eine Schlinge bildenden Doppelseilzug auf der Seite der Strammfeder, der an einer Verzweigungsstelle übergeht in ein einfaches Antriebsseil, dessen Ende mit der Strammfeder zusammenwirkt, wobei dieses Zugmittel die Seilscheibe wenigstens einmal umschlingt. Zur weiteren Festlegung des Zugmittels auf der Seilscheibe hat diese in ihrem Außenumfang eine Ausnehmung, in die ein Stahlring eingelegt wird, welcher an der Verzweigungsstelle des Zugmittels auf dieses aufgepreßt ist.

Der Hebel des Hebelsystems, welcher in der Ruhelage des Gurtstrammers die Kraft der Strammfeder aufnimmt, hat einen Hakenarm, dessen Hakenzahn in eine Aussparung einer auf das Antriebsseil aufgepreßten Halterungsbüchse eingreifen kann. Eine besonders biegsame Ausführung des Gurtstrammers ergibt sich, wenn der Zahn des Hakenarms mit einem Widerlagerelement am Umfang der Seilscheibe oder der Zahnscheibe zusammenwirkt.

Weitere Vorteile und Merkmale der Erfindung ergeben sich aus der nachfolgenden Beschreibung von Ausführungsbeispielen. Es zeigt
- Fig. 1: die seitliche Ansicht (in Richtung der Fahrzeugquerachse) einer ersten Ausführungsform des Gurtstrammers; einige Einzelheiten und die Gehäuseabdeckung sind weggelassen;
- Fig. 2: eine vergrößerte Ansicht auf den Auslösemechanismus in dessen Ruhestellung;
- Fig. 3: den Schnitt M-N in Fig. 2;
- Fig. 4: die Ansicht gemäß Fig. 2 in der Stellung beim Ansprechen des Auslösemechanismus;
- Fig. 5: schematisch die Bewegungen des Sperrglieds zur Erklärung der Funktion des Auslösemechanismus;
- Fig. 6: eine Ansicht des Auslösemechanismus ähnlich Fig. 2 einer zweiten Ausführungsform;
- Fig. 7: die Ansicht gemäß Fig. 6 bei der Auslösung des Gesperres;
- Fig. 8: die Schnittdarstellung ähnlich Fig. 3 einer weiteren Ausbildung der Stößeleinheit des Auslösemechanismus und
- Fig. 9: eine Ansicht ähnlich Fig. 6 und 7 auf eine Zwischenphase dieser Stellungen zu Anfang der Auslösung.

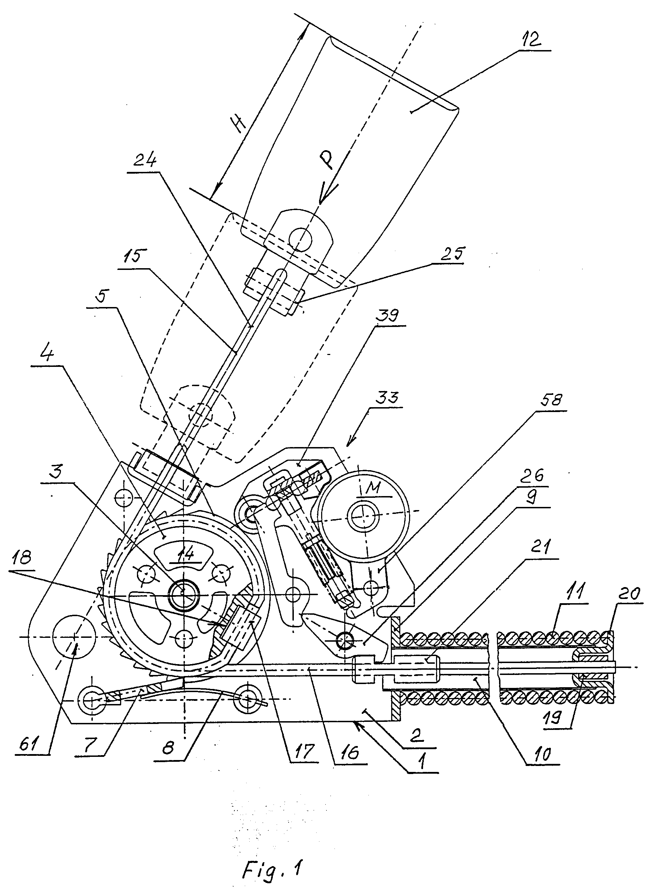

Die tragende Basis 1 des Gurtstrammers gemäß Fig. 1 bis 5 ist eine Grundplatte 2, an welcher mittels einer Bolzenachse 3 eine Seilscheibe 4 drehbar gelagert ist. An wenigstens einer Seite dieser Seilscheibe ist eine Zahnscheibe 5 mit sägezahnartigen Rastzähnen angenietet. Mit der Verzahnung der Zahnscheibe 5 wirkt eine schwenkbare Sperrklinke 7 zusammen, die von einer Blattfeder 8 so im Eingriff mit der Verzahnung gehalten ist, daß die Seilscheibe sich nur im Gegenuhrzeigersinn drehen kann.

Am in Fahrtrichtung vorderen Ende der Grundplatte 2 ist ein Schenkel 9 seitlich abgebogen, an welchem ein Führungsrohr 10 befestigt ist, auf das eine auslösbare Strammfeder 11 aufgesetzt ist.

Zum Gurtstrammer gehört ein Gurtschloß 12 herkömmlicher Konstruktion, welches über ein Zugmittel mit der vorgespannten Strammfeder 11 verbunden ist, wobei das Zugmittel das Gesperre 14 aus Seilscheibe 4 mit Zahnscheibe 5 um ca. 500 Grad umschlingt, also zusätzlich zur Umlenkung eine vollständige Umschlingung verwirklicht ist.

Das Zugmittel besteht aus einem Seil, welches zur Strammfeder 11 hin als einfaches Antriebsseil 16 ausgeführt ist und sich an einer Verzweigungsstelle zum Gurtschloß 12 hin zu einem Doppelseilzug 15 verzweigt, welcher eine Schlinge 24 bildet, die einen Bolzen 25 am Gurtschloß 12 umschlingt.

Am Verzweigungspunkt des Zugseils ist ein Stahlring 17 aufgepreßt, welcher in eine Ausnehmung 18 im Umfang der Seilscheibe 4 eingelegt ist. Auf diese Weise ist eine formschlüssige Festlegung des Zugseils auf der Seilscheibe 4 erreicht.

Ein am Ende des Antriebsseils 16 angepreßter Stahlring 19 hält über eine Stützscheibe 20 die Strammfeder 11 in ihrer vorgespannten Stellung.

Im Bereich des Schenkels 9 ist auf das Antriebsseil 16 eine Halterungsbüchse 21 aufgepreßt, welche eine eine Widerlagerfläche 22 ausbildende Aussparung 23 aufweist.

Die Spannkraft P der Strammfeder 11 wirkt auf einen Hakenarm 26 eines an der Grundplatte 2 drehbar gelagerten ersten Hebels 27 des Hebelsystems, wobei der Zahn 28 des Hakenarms 26 an der Widerlagerfläche 22 der Halterungsbüchse 21 angreift. Der andere, längere Arm des ersten Hebels 27 bildet eine Nocke 29, welche mit einem Nockenarm 30 eines kraftreduzierenden Schlußhebels 31 des Hebelsystems zusammenwirkt.

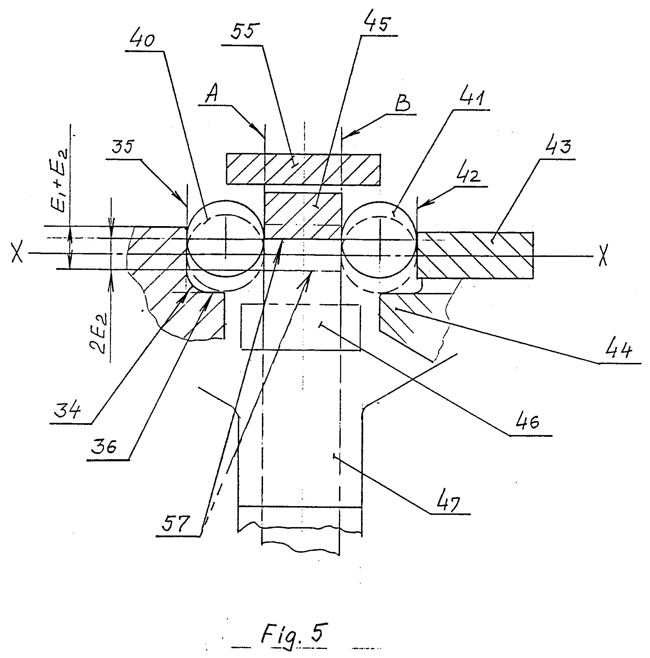

Der andere längere Arm des Schlußhebels 31 wirkt als Tastarm 32 mit dem Auslösemechanismus 33 zusammen und weist an seinem Ende einen Ausschnitt 34 mit rechtwinklig zueinander stehenden Oberflächen, nämlich einer Druckfläche 35 und einer Stützfläche 36 (Fig. 5) auf. Die Achse 37 des ersten Hebels 27 und die Achse 38 des Schlußhebels 31 ragen rechtwinklig von der Grundplatte 2 auf.

Die Geometrie des aus erstem Hebel 27 und Schlußhebel 31 bestehenden Hebelsystems ist so gewählt, daß die Kraft F, welche die Druckfläche 35 des Tastarms 32 auf eine Rolle 40 ausübt, etwa 1/10 der Kraft P der Strammfeder 11 beträgt.

Der Auslösemachnismus 33 ist mittels einer Halterung 39 auf der Grundplatte 2 aufgesetzt. Zu ihm gehört eine erste Rolle 41, welche sich mit einer äußeren Mantellinie an die ebene Widerlagerfläche 42 eines rechtwinklig aufragenden Pfostens 43 legt, sowie die bereits erwähnte andere Rolle 40, die im Ausschnitt 34 des Tastarms 32 frei eingelegt ist. Die Rolle 41 ist von unten durch einen an der Halterung 39 ausgebildeten Vorsprung 44 gestützt und so vor einem Herausfallen gesichert.

Zwischen den Rollen 40 und 41 befindet sich ein Sperrglied 45 eines Stößels 46, wobei die vom Tastarm 32 ausgeübte reduzierte Kraft der Strammfeder sich längs einer geraden Kraftwirkungslinie X-X über die Rolle 40, das Sperrglied 45 und die Rolle 41 auf den Pfosten 43 abstützt.

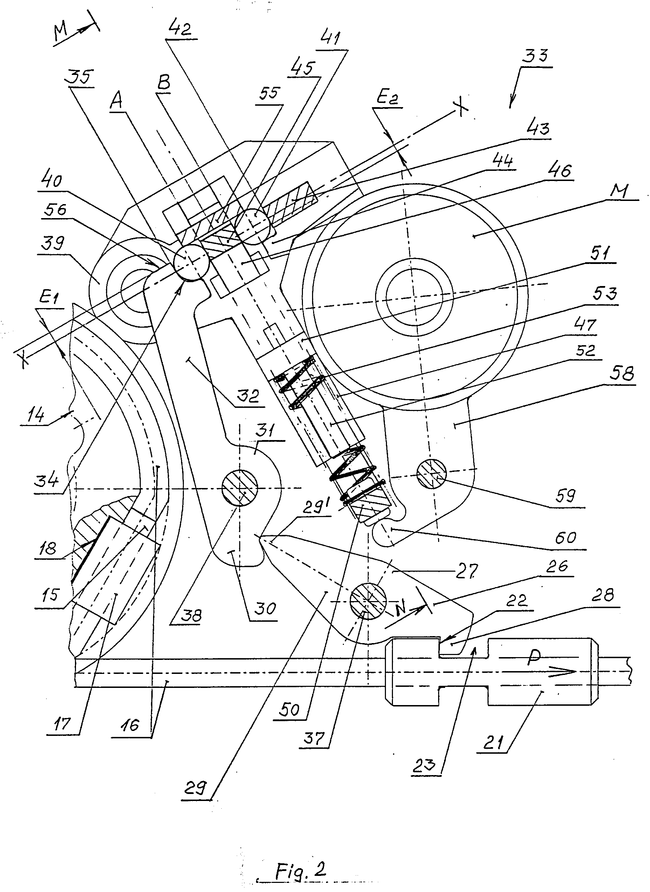

Vorzugsweise sind die Druckfläche 35 des Ausschnitts 34, die Seitenflächen A und B des Sperrglieds 45 und die Widerlagerfläche 42 des Pfostens 43 (Fig. 2) parallel zueinander orientiert. Ebenso sind diese Flächen sowie die Achsen der Rollen 40, 41 rechtwinklig zur Grundplatte 2 orientiert.

Das Sperrglied 45 gehört zu einem Stößel 46 in Gestalt einer C-förmigen Klammer und stellt dessen oberen Schenkel dar. Der untere Schenkel bildet einen Fuß 50. Der Rückteil 49 des Stößels ist verschieblich geführt in einem Verlängerungsteil 47 der Halterung 39, welcher einen Kanal 48 bildet, in dem der Rückteil 49 des Stößels 46 gleitet.

Ein am Verlängerungsteil 47 ausgebildeter Vorsprung 51 mit einem Fingervorsprung 52 dient zur Abstützung und Halterung einer Ansteuerfeder 53, deren unteres Ende auf die Innenfläche des Fußes 50 des Stößels 46 drückt und diesen nach unten zu verschieben sucht.

Dem Stößel 46 ist eine Begrenzungsklammer 54 angegliedert, der die Rollen 40, 41 an ihrer vorderen Stirnfläche überdeckt und ein Herausfallen derselben in Axialrichtung verhindert, sowie mit einer abgewinkelten Lasche 55 die Rollen 40, 41 von oben abstützt und schließlich auch die Bewegung des Stößels 46 nach unten begrenzt.

In der Ruhelage des Auslösemechanismus befinden sich die Rollen 40, 41 in ihrer unteren Stellung, in der sie auf der Stützfläche 36 bzw. dem Vorsprung 44 ruhen, und die Kraft F des Tastarms 32 wirkt längs der in Fig. 2 und 5 ersichtlichen Kraftwirkungslinie X-X. Von dieser Kraftwirkungslinie hat die obere Kante 56 des Ausschnitts 34 des Tastarms 32 eine Entfernung E₁, die größer ist als die Entfernung E₂ der unteren Fläche 57 des Sperrgliedes 45 von dieser durch die Achsen der Rollen 40, 41 gehenden Kraftwirkungslinie X-X.

Seitlich bzw. in Fahrtrichtung vor der Halterung 39 ist ein Massenträger 58 um eine Achse 59 schwenkbar gelagert, der als zweiarmiger Hebel ausgebildet ist, wobei am Ende des einen Arms eine Trägheitsmasse M angeordnet ist und der andere kurze Arm als Taster 60 ausgebildet ist, der mit dem Fuß 50 des Stößels 46 zusammenwirkt.

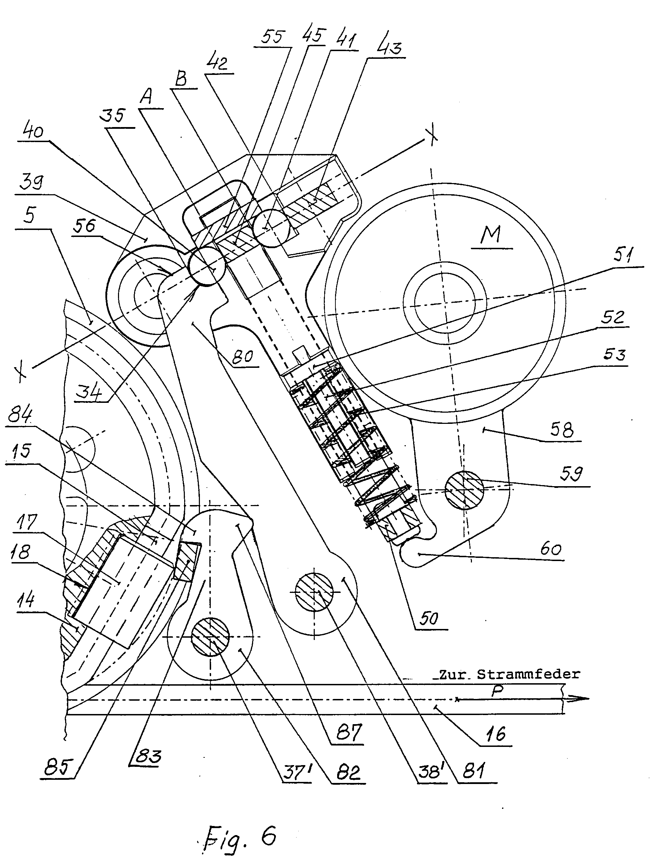

Fig. 6 zeigt eine bevorzugte Ausführungsform des Gurtstrammers, bei der die Strammfeder an einer entfernteren Stelle im Fahrzeug angeordnet sein kann und deren Kraft z.B. über einen Bowdenzug zum Gurtstrammermechanismus geleitet werden kann.

Diese Ausführung unterscheidet sich dadurch, daß die Kraft P der Strammfeder in der Ruhestellung aufgenommen wird durch einen Hakenarm 83 eines Hebels 82, welcher um eine Achse 37' an der Grundplatte 2 in der Nähe des Gesperres 14 drehbar gelagert ist und mittels eines Zahns 84 mit einem am Umfang des Gesperres 14, vorzugsweise am Umfang der Zahnscheibe 5, ausgeführten Widerlagerelement 85 zusammenwirkt. Dieses Widerlagerelement 85 kann als Stange, als Vorsprung oder als Zahn ausgebildet sein.

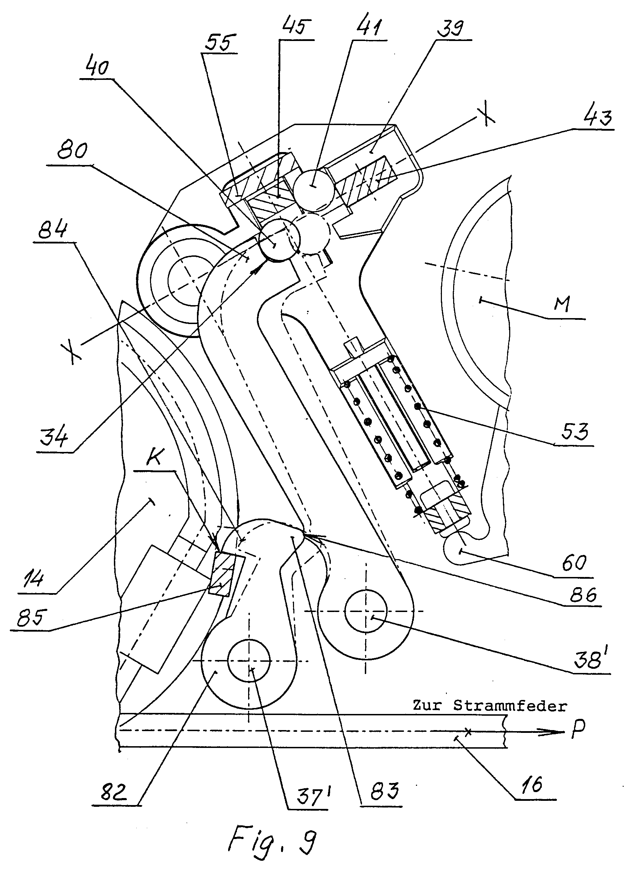

Auch bei dieser Ausbildung hat der Tastarm 80 des Schlußhebels 81 des Hebelsystems ähnlich dem Tastarm 32 des Schlußhebels 31 einen rechteckigen Ausschnitt 34. An der Rückseite des Arms 80 ist eine Gleitfläche ausgeführt, welche mit einer Nocke 87 an der Rückseite des Hakenarms 83 zusammenwirkt (Fig. 9).

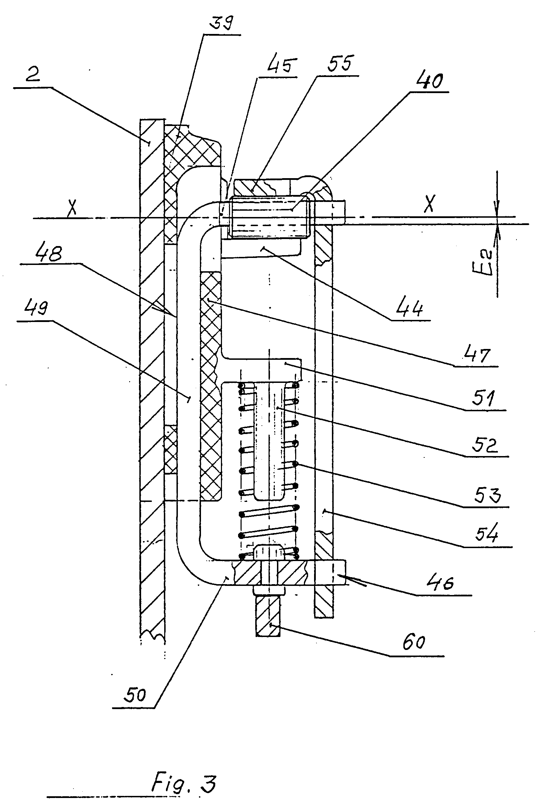

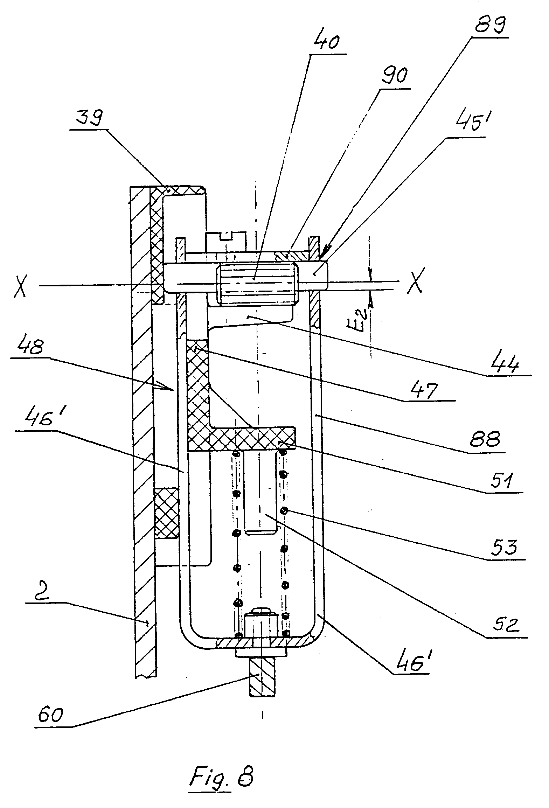

Fig. 8 zeigt noch eine andersartige Ausbildung des Stößels des Auslösemechanismus in der Darstellungsweise von Fig. 3. Bei dieser Ausbildung ist der Stößel 46' eine U-förmige Klammer, die an den Enden ihrer Schenkel 88 zwei einander gegenüberliegende rechteckige Öffnungen 89 aufweist, in die das Sperrglied 45' in Form eines rechteckigen kurzen Stabs eingesetzt ist. Das Sperrglied 45 wird nach seinem Einsetzen in die genannten Öffnungen mittels einer Begrenzungsplatte 90 befestigt, wobei diese Platte die Rollen 40, 41 von oben abstützt und in der vorgesehenen Stellung hält. Diese Ausbildung ist weniger anfällig für Herstellungsfehler und -ungenauigkeiten.

Der beschriebene Gurtstrammer kann am Rahmen oder am Sitz des Fahrzeugs mittels einer Befestigungsbohrung 61 befestigt werden. Eine andere Möglichkeit ist es, die Bolzenachse 3 der Seilscheibe 4, die sich hierfür ebenfalls eignet, am Rahmen oder am Sitz zu befestigen.

Der beschriebene Gurtstrammer funktioniert wie folgt:
Unter normalen Fahrtbedingungen bleiben die auftretenden Verzögerungen und Stöße unterhalb einer Größe, die ein Ansprechen auslöst. Der Massenträger 58 schwenkt nicht oder nur um kleine Winkel, was entsprechend kleine Verlagerungen des Stößels 46 zur Folge hat. Dieses Schwingen geschieht ohne wesentlichen Widerstand, da am Sperrglied 45 nur eine Rollreibung auftritt und die Rollen 40, 41 zwischen der Seitenfläche A und der Druckfläche 35 bzw. der Seitenfläche B und der Seitenfläche 42 des Pfostens 43 hin und her rollen. Der Verlagerungsweg der Rollen beträgt dabei jeweils die Hälfte des Verlagerungsweges des Sperrglieds 45.

Die bei einer gegebenen Verzögerung des Fahrzeugs auftretende Auslenkung des Massenträgers 58 und Verschiebung des Stößels 46 hängt von der Masse M, der Kraft und der Charakteristik der Ansteuerfeder 53 und der Geometrie der Kinematik ab. Diese sind so gewählt, daß die im normalen Fahrbetrieb auftretenden Verzögerungen eine Verschiebung des Stößels von nicht mehr als 2 E₂ bewirken. Diese Stellung ist in Fig. 5 mit ausgezogenen Linien gezeigt; die Ausgangslage des Sperrglieds 45 und der Rollen 40, 41 ist gestrichelt gezeigt. Es ist zu sehen, daß bei Schwingungen innerhalb dieses Bereichs die Rollen 40, 41 zwischen den Flächen A, 35 bzw. B, 42 gestützt bleiben und den Tastarm 32 in seiner Ruhestellung halten. Die von der Strammfederkraft P herrührende Andrückkraft F der Druckfläche 35 auf die Rolle 40 bleibt über das Sperrglied und die Rolle 41 auf den Pfosten 43 gestutzt. Bei jeder Verminderung oder Beendigung der Fahrzeugverzögerung bringt die Ansteuerfeder 53 mit ihrer Kraft T den Stößel 46 und die Rollen in ihre anfängliche Ruhestellung zurück und der Massenträger 58 wird ebenfalls in seine Ausgangsstellung zurückgeschwenkt.

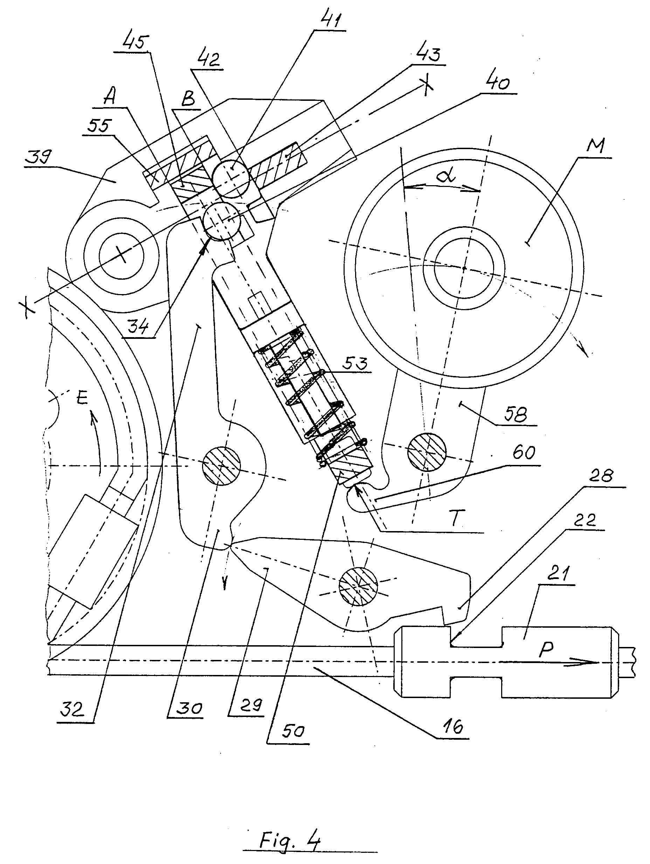

Kommt es nun bei einem Unfall zu einer Fahrzeugverzögerung, die den vorbestimmten Grenzwert überschreitet, beispielsweise bei einem Frontalaufprall, dann wird der Massenträger 58 um einen größeren Winkel α (Fig. 4) schwenken und die Verschiebung des Sperrgliedes 45 überschreitet die Größe von 2 E₂. Dabei verlieren die Rollen 40, 41 ihren Halt an den Seitenflächen A, B des Sperrglieds 45 und der Tastarm 32 wirft die Rolle 40, deren Kontakt mit der Druckfläche 35 noch besteht, in den Raum unterhalb des Sperrglieds 45. Dies geschieht durch eine Drehung des Tastarms 32, durch welche der Nockenarm 30 den Nocken 29 des ersten Hebels 27 freigibt, so daß dieser ebenfalls entgegen dem Uhrzeigersinn schwenken kann und sein Zahn 28 die Halterungsbüchse 21 freigibt. Die Strammfeder 11 kann sich ausdehnen und zieht über das Zugseil 16, 15 unter Drehung des Gesperres 14 im Gegenuhrzeigersinn das Gurtschloß 12 um den Betrag H nach unten, wodurch der Anschnallgurt gestrammt wird.

Wenn jetzt die von der gesicherten Person ausgehende Zugkraft auf das Gurtschloß 12 die Kraft der Strammfeder 11 übersteigt, wirkt das Gesperre 14 und verhindert, daß das Gurtschloß 12 wieder hochgezogen wird. Das Gesperre 14 aus Zahnscheibe 5 und Sperrklinke 7 ist so dimensioniert, daß es den auftretenden Zugbelastungen standhält.

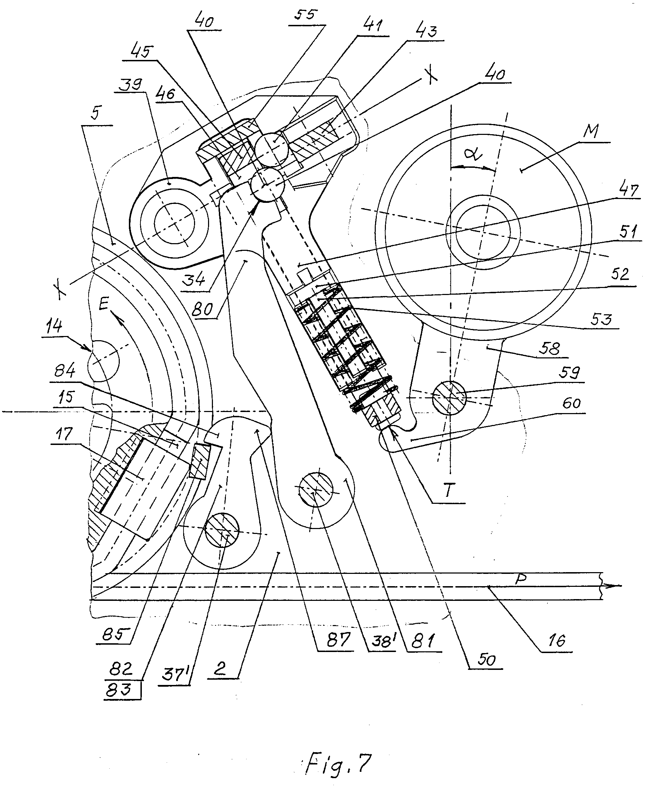

Der Gurtstrammer in der Ausbildung gemäß Fig. 6, 7, 8, 9 funktioniert entsprechend. Bei Überschreiten der kritischen Fahrzeugverzögerung schwenkt der Masssenträger 58 in gleicher Weise um die Achse 59 und hebt den Stößel 46' mit dem Sperrglied 45' um einen Betrag größer als 2 E₂, so daß die Rollen 40, 41 um eine größere Strecke als E₂ abrollen, so daß die Rolle 40 ihre Abstützung am Sperrglied 45' verliert. Der Schlußhebel 81 wirft die Rolle 40 unter das Sperrglied 45' und läßt dabei den Hebel 82 im Uhrzeigersinn schwenken, wobei dessen Nocken 87 am Rücken des Schlußhebels 81 gleitet. Der Zahn 84 des Hebels 82 gibt das Widerlagerelement 85 frei, so daß die Strammfeder über das Gesperre das Gurtschloß um den Betrag H einziehen kann.

### Bezugszeichenliste

- 1: Basis
- 2: Grundplatte
- 3: Bolzenachse
- 4: Seilscheibe
- 5: Zahnscheibe
- 7: Sperrklinke
- 8: Blattfeder
- 9: Schenkel
- 10: Führungsrohr
- 11: Strammfeder
- 12: Gurtschloß
- 14: Gesperre
- 15: Doppelseilzug
- 16: Antriebsseil
- 17: Stahlring
- 18: Ausnehmung
- 19: Stahlring
- 20: Stützscheibe
- 21: Halterungsbüchse
- 22: Widerlagerfläche
- 23: Aussparung
- 24: Schlinge
- 25: Bolzen
- 26: Hakenarm
- 27: Hebel
- 28: Zahn
- 29: Nocken
- 30: Nockenarm
- 31: Schlußhebel
- 32: Tastarm
- 33: Auslösemechanismus
- 34: Ausschnitt
- 35: Druckfläche
- 36: Stützfläche
- 37, 37': Achse
- 38, 38': Achse
- 39: Halterung
- 40: Rolle (links)
- 41: Rolle (rechts)
- 42: Widerlagerfläche
- 43: Pfosten
- 44: Vorsprung
- 45, 45': Sperrglied
- 46, 46': Stößel
- 47: Verlängerungsteil
- 48: Kanal
- 49: Rückteil
- 50: Fuß
- 51: Vorsprung
- 52: Fingervorsprung
- 53: Ansteuerfeder
- 54: Begrenzungsklammer
- 55: Lasche
- 56: Kante
- 57: Unterfläche
- 58: Massenträger
- 59: Achse
- 60: Taster
- 61: Befestigungsbohrung
- (62): Masse
- (63): Strecke H
- (64): Seitenfläche A
- (65): Seitenfläche B
- (66): Entfernung E₁
- (67): Entfernung E₂
- (68): Ebene X-X
- (69): Kraft P
- (70): Kraft F
- (71): Kraft T
- (72): Kontaktfläche K
- (73): Pfeil E
- (74): Winkel α
- (75): Strecke 2 E₂
- 80: Tastarm
- 81: Schlußhebel
- 82: Hebel
- 83: Hakenarm
- 84: Zahn
- 85: Widerlagerelement
- 87: Nocke
- 88: Schenkel
- 89: Rechteckige Öffnung
- 90: Begrenzungsfläche

## Patentansprüche

1. Gurtstrammer für Sicherheitsgurte eines Fahrzeugs mit einem Kraftspeicher (11), Vorzugsweise einer Strammfeder, der bei Überschreitung einer bestimmten Verzögerung von einem einen Verzögerungssensor aufweisenden Auslösemechanismus (33) über ein Hebelsystem (27, 31) auslösbar ist und mittels eines Zugmittels über ein Gesperre mit einem Sicherheitsgurtteil, vorzugsweise dem Gurtschloß, verbunden ist,
dadurch gekennzeichnet, daß der Auslösemechanismus (33) in einer Halterung (39) zwei Rotationskörper, vorzugsweise zwei achsparallele Rollen (40, 41) aufweist, zwischen welchen ein Sperrglied (45, 45') mit vorzugsweise planparallel ausgebildeten Seitenflächen (A, B) beweglich entgegen der Kraft (T) einer Ansteuerfeder (53) angeordnet ist, wobei ein erster Rotationskörper (41) mit seiner außenliegenden Mantellinie gegen eine parallel zu den Sperrgliedseitenflächen (A, B) angeordnete basisfeste Widerlagerfläche (42) abgestützt liegt und der andere Rotationskörper (40) in einem Ausschnitt (34) am Ende eines Testarmes (32, 80) eines Schlußhebels (31, 81) des Hebelsystems durch die reduzierte Kraft (F) der Strammfeder (11) beaufschlagt liegt, wobei die Druckfläche (35) des Ausschnitts (34) des Tastarmes (32, 80) parallel zu den Seitenflächen (A, B) des Sperrgliedes (45, 45') und zur Widerlagerfläche (42) verläuft und die Beaufschlagungskraft (F) auf diese in gerader Kraftwirkungslinie (X-X) über die Rotationskörper (40, 41) und das zwischenliegende Sperrglied (45) wirkt,
wobei als Verzögerungssensor eine Masse (M) bei den Fahrzeugverzögerungen durch ihre Trägheitskraft über einen Stößel (46) entgegen der Wirkung der Ansteuerfeder (53) auf das Sperrglied (45) wirkt und dieses bei Überschreitung der bestimmten Verzögerung zwischen den Rotationskörpern (40, 41) bis zum Verlust seiner die Rotationskörper auf Abstand haltenden Wirkung bewegt und den Kraftspeicher auslöst.

2. Gurtstrammer nach Anspruch 1, dadurch gekennzeichnet, daß der Stößel (46) als eine C-förmige Klammer ausgebildet ist, deren Rückteil (49) in einem Kanal (48) der Halterung (39) verschiebbar geführt ist,
dessen einer Schenkel das Sperrglied (45) bildet, und dessen anderer Schenkel einen von der Ansteuerfeder (53) beaufschlagten Fuß (50) darstellt,
wobei das andere Ende der Ansteuerfeder (53) sich an einem Fingervorsprung (51) an der Halterung (39) abstützt.

3. Gurtstrammer nach Anspruch 1 und 2, dadurch gekennzeichnet, daß dem Stößel (46) eine abgewinkelte Begrenzungsklammer (54) angegliedert ist, welche die Rollen (40, 41) oben und an der vorderen Stirnfläche übergreift und sie in Position hält.

4. Gurtstrammer nach Anspruch 1, dadurch gekennzeichnet, daß das Sperrglied (45') (Fig. 8) als ein kurzer Stab mit rechteckigem Querschnitt ausgebildet ist und der Stößel (46') als eine U-förmige Klammer (88), deren symmetrische Schenkel an ihren Enden gegenüberliegende rechteckige Öffnungen (89) zur Montage des Sperrgliedes (45') aufweisen, und eine Begrenzungsplatte (90) oberhalb des Sperrglieds (45') vorgesehen ist, wobei die Schenkel die Stirnenden der Rollen (40, 41) überdecken und diese in Position halten.

5. Gurtstrammer nach einem oder mehreren der Ansprüche 1 bis 4, dadurch gekennzeichnet, daß die erste Rolle (41) von unten durch einen Vorsprung (44) der Halterung (39) und die andere Rolle (40) durch die untere Fläche des Ausschnitts (34) des Tastarmes (32, 80) abgestutzt ist.

6. Gurtstrammer nach einem oder mehreren der Ansprüche 1 bis 5, dadurch gekennzeichnet, daß die obere Kante (56) des Ausschnitts (34) des Tastarms (32, 80) in einer größeren Entfernung (E₁) von der Kraftwirkungslinie (X-X) in deren Ausgangslage liegt als die Entfernung (E₂) der unteren Fläche (57) des Sperrgliedes (45, 45') von der Kraftwirkungslinie (X-X) in deren Ausgangslage beträgt.

7. Gurtstrammer nach einem oder mehreren der Ansprüche 1 bis 6, dadurch gekennzeichnet, daß der Auslösemechanismus (33) an einer Grundplatte (2) der Basis (1) geneigt angeordnet ist.

8. Gurtstrammer nach einem oder mehreren der Ansprüche 1 bis 7, dadurch gekennzeichnet, daß die Trägheitsmasse (M) an einem Massenträger (58) angeordnet ist, welcher einen Arm eines um eine Achse (59) schwenkbaren zweiarmigen Hebels darstellt,
wobei der andere Arm als Taster (60) mit dem Stößel (46, 46') in ständiger Berührung steht
und der Massenträger (58) mit der Trägheitsmasse (M) neben der Halterung (39) angeordnet ist.

9. Gurtstrammer nach einem oder mehreren der Ansprüche 1 bis 8, dadurch gekennzeichnet, daß das Gesperre (14) eine Seilscheibe (4) aufweist, welcher mindestens eine Zahnscheibe (5) koaxial fest angegliedert ist, und welche auf einer Bolzenachse (3) an der Grundplatte (2) drehbar gelagert ist.

10. Gurtstrammer nach einem oder mehreren der Ansprüche 1 bis 9, dadurch gekennzeichnet, daß das Zugmittel ein Seilzug ist, welcher auf der Seite des Gurtschlosses (12) als Doppelseilzug (15) ausgebildet ist und eine Schlinge (24) bildet und auf der Seite der Strammfeder (11) als einfaches Antriebsseil (16) ausgebildet ist, und daß das Zugmittel (13) die Seilscheibe (4) mindestens einmal umschlingt.

11. Gurtstrammer nach einem oder mehreren der Ansprüche 1 bis 10, dadurch gekennzeichnet, daß auf den Seilzug an der Stelle seiner Verzweigung ein Stahlring (17) aufgepreßt ist, welcher in einer in der Peripherie der Seilscheibe (4) ausgebildeten Ausnehmung (18) zu liegen kommt.

12. Gurtstrammer nach einem oder mehreren der Ansprüche 1 bis 11, dadurch gekennzeichnet, daß eine federbeaufschlagte Sperrklinke (7) in der Basis (1) ständig mit den Rastzähnen des Gesperres (14) zusammenwirkt und eine Drehung nur im Sinne des Einziehens des Doppelseilzuges (15) mit dem Gurtschloß (12) zuläßt.

13. Gurtstrammer nach einem oder mehreren der Ansprüche 1 bis 12, dadurch gekennzeichnet, daß der erste Hebel (27, 82) des Hebelsystems mit einem Hakenarm (26, 83) ausgebildet ist, dessen Zahn (28, 84) die Kraft (P) der Strammfeder (11) bis zur Auslösung aufnimmt.

14. Gurtstrammer nach einem oder mehreren der Ansprüche 1 bis 13, dadurch gekennzeichnet, daß auf dem Antriebsseil (16) eine Halterungsbüchse (21) mit einer eine Widerlagerfläche (22) bildenden Aussparung (23) befestigt ist und der Zahn (28) des Hakenarmes (26) in diese Widerlagerfläche (22) eingreift.

15. Gurtstrammer nach einem oder mehreren der Ansprüche 1 bis 13, dadurch gekennzeichnet, daß an der Peripherie der Zahnscheibe (5) oder Seilscheibe (4) ein Widerlagerelement (85) vorgesehen ist, an welchem der Zahn (84) des Hakenarmes (83) angreift (Fig. 6, 7, 9).

16. Gurtstrammer nach einem oder mehreren der Ansprüche 1 bis 13 und 15, dadurch gekennzeichnet, daß die Widerlagerfläche (85) zum Verrasten mit dem Zahn (84) des Hakenarmes (83) an einer an der Peripherie des Gesperres (14) befestigten Stopperstange oder einem Vorsprung oder Zahn ausgeführt ist.

17. Gurtstrammer nach einem oder mehreren der Ansprüche 1 bis 16, dadurch gekennzeichnet, daß das Hebelsystem aus einem den Hakenarm (26, 83) aufweisenden ersten Hebel (27, 82) und einem Schlußhebel (31, 81) besteht und diese über nockenartige Vorsprünge (29, 30; 87) zusammenwirken.

## Claims

1. A belt tightener for seat-belts of a vehicle, having an energy store (11), preferably a tensioning spring, which when a certain deceleration is exceeded can be released by a release mechanism (33), which has a deceleration sensor, by way of a lever system (27, 31) and is connected by means of a traction mechanism, via a locking mechanism, to a seat-belt portion, preferably the belt catch,
characterised in that in a holding device (39) the release mechanism (33) has two rotational bodies, preferably two axially parallel rollers (40, 41) between which there is arranged so as to be moveable against the force (T) of a control spring (53) a locking member (45, 45'), the side surfaces (A, B) of which are preferably constructed so as to be plane parallel, wherein a first rotational body (41) is supported, along its external surface line, against a base-secured abutment surface (42), which is arranged in a manner such that it is parallel to the side surfaces (A, B) of the locking member, and the other rotational body (40) rests in a cutout (34) at the end of a contact arm (32, 80) of an end lever (31, 81) of the lever system in a manner such that it is impinged upon by the reduced force (F) of the tensioning spring (11), wherein the pressure surface (35) of the cutout (34) of the contact arm (32, 80) extends such that it is parallel to the side surfaces (A, B) of the locking member (45, 45') and to the abutment surface (42), and the impinging force (F) acts on them in a straight action-of-force line (X-X) via the rotational bodies (40, 41) and the intermediate locking member (45),
wherein as a deceleration sensor, in the event of vehicle decelerations, a mass (M) acts by means of its inertial force on the locking member (45), by way of a tappet (46), against the action of the control spring (53), and if the certain deceleration is exceeded moves said locking member (45) between the rotational bodies (40, 41) until the loss of its action which keeps the rotational bodies at a distance, and releases the energy store.

2. A belt tightener according to claim 1, characterised in that the tappet (46) is in the form of a C-shaped clamp, the rear portion (49) of which is slidably guided in a channel (48) of the holding device (39), the one limb of which tappet forms the locking member (45) and the other limb of which represents a foot (50) which is impinged upon by the control spring (53), wherein the other end of the control spring (53) is supported on a finger-type projection (51) on the holding device (39).

3. A belt tightener according to claims 1 and 2, characterised in that connected to the tappet (46) is a bent limiting clamp (54), which covers the rollers (40, 41) at the top and on the front end face and holds them in position.

4. A belt tightener according to claim 1, characterised in that the locking member (45') (Figure 8) is in the form of a short rod which is rectangular in cross-section and the tappet (46') is in the form of a U-shaped clamp (88), the symmetrical limbs of which have at their ends opposing rectangular openings (89) for mounting the locking member (45'), and a limiting plate (90) is provided above the locking member (45'), wherein the limbs cover the end faces of the rollers (40, 41) and hold them in position.

5. A belt tightener according to one or more of the claims 1 to 4, characterised in that the first roller (41) is supported from beneath by a projection (44) of the holding device (39) and the other roller (40) is supported by the lower surface of the cutout (34) of the contact arm (32, 80).

6. A belt tightener according to one or more of the claims 1 to 5, characterised in that in its starting position, the upper edge (56) of the cutout (34) of the contact arm (32, 80) is at a greater distance (E₁) from the action-of-force line (X-X) than the distance (E₂) that the lower surface (57) of the locking member (45, 45') in its starting position is from the action-of-force line (X-X).

7. A belt tightener according to one or more of the claims 1 to 6, characterised in that the release mechanism (33) is arranged in an inclined manner on a base plate (2) of the base (1).

8. A belt tightener according to one or more of the claims 1 to 7, characterised in that the inertia mass (M) is arranged on a mass carrier (58), which represents one arm of a two-armed lever which can be pivoted around an axle (59), wherein the other arm as a contact piece (60) is in constant contact with the tappet (46, 46'), and the mass carrier (58) having the inertia mass (M) is arranged next to the holding device (39).

9. A belt tightener according to one or more of the claims 1 to 8, characterised in that the locking mechanism (14) has a cable disc (4), to which at least one toothed disc (5) is securely co-axially connected, and which cable-disc (4) is rotatably mounted on the base plate (2) on a pin axle (3).

10. A belt tightener according to one or more of the claims 1 to 9, characterised in that the traction mechanism is a cable control, which on the side of the belt catch (12) is formed as a double cable control (15) and forms a loop (24), and on the side of the tensioning spring (11) is formed as a simple drive cable (16), and in that the traction mechanism (13) is wound around the cable disc (4) at least once.

11. A belt tightener according to one or more of the claims 1 to 10, characterised in that pressed onto the cable control at the point where it branches, there is a steel ring (17), which comes to rest in a recess (18) which is formed in the circumference of the cable disc (4).

12. A belt tightener according to one or more of the claims 1 to 11, characterised in that a spring-loaded locking pawl (7) in the base (1) always acts together with the notches of the locking mechanism (14) and permits a rotation only in the direction of the pulling-in of the double cable control (15) with the belt catch (12).

13. A belt tightener according to one or more of the claims 1 to 12, characterised in that the first lever (27, 82) of the lever system is formed with a hooked arm (26, 83), the tooth (28, 84) of which takes up the force (P) of the tensioning spring (11) until release occurs.

14. A belt tightener according to one or more of the claims 1 to 13, characterised in that fastened to the drive cable (16) there is a holding sleeve (21), having a recess (23) which forms an abutment surface (22), and the tooth (28) of the hooked arm (26) engages in this abutment surface (22).

15. A belt tightener according to one or more of the claims 1 to 13, characterised in that provided on the circumference of the toothed disc (5) or cable disc (4) there is an abutment element (85), at which the tooth (84) of the hooked arm (83) engages (Figures 6, 7, 9).

16. A belt tightener according to one or more of the claims 1 to 13 and 15, characterised in that in order to lock with the tooth (84) of the hooked arm (83), the abutment surface (85) is constructed on a stopper rod or a projection or tooth which is fastened to the circumference of the locking mechanism (14).

17. A belt tightener according to one or more of the claims 1 to 16, characterised in that the lever system comprises a first lever (27, 82), which has the hooked arm (26, 83), and an end lever (31, 81), and in that these act together by way of cam-like projections (29, 30; 87).

## Revendications

1. Rétracteur de ceinture pour des ceintures de sécurité d'un véhicule automobile comportant un accumulateur de force (11), de préférence un ressort de rétraction, qui en cas de décélération supérieure à une valeur déterminée, est déclenché par l'intermédiaire d'un système à leviers (27, 31) par un mécanisme de déclenchement (33) comprenant un capteur de décélération et qui est relié à l'aide d'un moyen de traction passant par un mécanisme d'arrêt, à un élément de ceinture de sécurité, de préférence à la serrure de ceinture,
caractérisé par le fait que le mécanisme de déclenchement (33) comporte, dans un support (39), deux corps de révolution, de préférence deux galets (40, 41) dont les axes sont parallèles, entre lesquels un organe de verrouillage (45, 45') pourvu de surfaces latérales (A, B), de préférence parallèles planes, est monté mobile à l'encontre de la force (T) d'un ressort de commande (53),
un premier corps de révolution (41) étant en appui par sa génératrice extérieure sur une surface de contre-appui (42) qui est solidaire de la base et est disposée parallèlement aux surfaces latérales (A, B) de l'organe de verrouillage et l'autre corps de révolution (40) reposant dans une découpure (34) à l'extrémité d'un bras de palpage (32, 80) d'un levier de verrouillage (31, 81) du système à leviers et étant soumis à la force réduite (F) du ressort de rétraction (11),
la surface de contact (35) de la découpure (34) du bras de palpage (32, 80) s'étendant parallèlement aux surfaces latérales (A, B) de l'organe de verrouillage (45, 45') et à la surface de contre-appui (42) et la force (F) agissant sur celle-ci suivant un axe rectiligne (X-X), à travers les corps de révolution (40, 41) et l'organe de verrouillage (45) intercalé, une masse (M) formant capteur de décélération agissant par sa force d'inertie sur l'organe de verrouillage (45) à l'encontre de l'action du ressort de commande (53), par l'intermédiaire d'un poussoir (46), lors des décélérations du véhicule et déplaçant l'organe de verrouillage entre les corps de révolution (40, 41) jusqu'à ce que son action d'espacement des corps de révolution (40, 41) disparaisse et qu'il libère l'accumulateur de force lorsque la décélération dépasse la valeur déterminée.

2. Rétracteur de ceinture selon la revendication 1, caractérisé par le fait que le poussoir (46) se présente sous la forme d'un étrier en C dont le dos (49) est guidé coulissant dans un canal (48) du support (39), dont l'une des ailes constitue l'organe de verrouillage (45) et l'autre aile forme un talon (50) qui est sollicité par le ressort de commande (53), l'autre extrémité du ressort de commande (53) prenant appui sur une saillie (51) sur le support (39).

3. Rétracteur de ceinture selon les revendications 1 et 2, caractérisé par le fait qu'un étrier de limitation (54) coudé est associé au poussoir (46), lequel étrier chevauche les galets (40, 41) par le dessus et au niveau de leur face frontale et les maintient en position.

4. Rétracteur de ceinture selon la revendication 1, caractérisé par le fait que l'organe de verrouillage (45') (figure 8) est agencé sous forme d'une tige courte de section rectangulaire et le poussoir (46') sous la forme d'un étrier (88) en U dont les ailes symétriques sont pourvues à leur extrémité d'ouvertures (89) rectangulaires pour le montage de l'organe de verrouillage (45') et par le fait qu'il est prévu au-dessus de l'organe de verrouillage (45') une plaque de limitation (90), les ailes recouvrant les extrémités frontales des galets (40, 41) et maintenant ceux-ci en position.

5. Rétracteur de ceinture selon une ou plusieurs des revendications 1 à 4, caractérisé par le fait que le premier galet (41) est supporté par le dessous par un élément en saillie (44) du support (39) et que l'autre galet (40) est supporté par la surface inférieure de la découpure (34) du bras de palpage (32, 80).

6. Rétracteur de ceinture selon une ou plusieurs des revendications 1 à 5, caractérisé par le fait que le bord (56) supérieur de la découpure (34) du bras de palpage (32, 80), dans sa position initiale, est situé à une distance (E₁) de la ligne d'action de la force (X-X) supérieure à la distance (E₂) entre la surface inférieure (57) de l'organe de verrouillage (45, 45') et la ligne d'action de force (X-X), dans sa position initiale.

7. Rétracteur de ceinture selon une ou plusieurs des revendications 1 à 6, caractérisé par le fait que le mécanisme de déclenchement (33) est monté incliné sur une platine (2) de la base (1).

8. Rétracteur de ceinture selon une ou plusieurs des revendications 1 à 7, caractérisé par le fait que la masse d'inertie (M) est disposée sur un support (58) qui est l'un des bras d'un levier à deux bras pivotant autour d'un axe (59), l'autre bras, en tant que palpeur (60), étant en contact permanent avec le poussoir (46, 46') et le support (58) avec la masse d'inertie (M) étant disposé à proximité du support (39).

9. Rétracteur de ceinture selon une ou plusieurs des revendications 1 à 8, caractérisé par le fait que le mécanisme d'arrêt (14) comporte une poulie à câble (4) à laquelle est associée de manière fixe au moins une couronne dentée (5) coaxiale et qui est montée tournante sur une un axe (3) sur la platine (2).

10. Rétracteur de ceinture selon une ou plusieurs des revendications 1 à 9, caractérisé par le fait que le moyen de traction est un système à câble qui, côté serrure de ceinture (12) est agencé sous forme de câble double (15) et forme une boucle (24) et, côté ressort de rétraction (11) est agencé sous forme de câble moteur (16) simple, et par le fait que le moyen de traction (13) entoure au moins une fois la poulie à câble (4).

11. Retracteur de ceinture selon une ou plusieurs des revendications 1 à 10, caractérisé par le fait qu'une bague en acier (17) est sertie sur le système de câble au niveau de sa ramification, laquelle bague vient se loger dans un évidement (18) aménagé sur la périphérie de la poulie à câble (4).

12. Rétracteur de ceinture selon une ou plusieurs des revendications 1 à 11, caractérisé par le fait qu'un cliquet d'arrêt (7) à ressort monté sur la base (1) coopère de manière permanente avec des dents d'encliquetage du mécanisme d'arrêt (14) et n'autorise qu'une rotation dans le sens de la rétraction du câble double (15) et de la serrure de ceinture (12).

13. Rétracteur de ceinture selon une ou plusieurs des revendications 1 à 12, caractérisé par le fait que le premier levier (27, 82)du système à leviers est pourvu d'un bras à griffe (26, 83) dont la griffe (28, 84) supporte la force (P) du ressort de rétraction (11) jusqu'au moment du déclenchement.

14. Rétracteur de ceinture selon une ou plusieurs des revendications 1 à 13, caractérisé par le fait qu'une douille de retenue (21) pourvue d'un évidement (23) formant une surface de contre-appui (22) est fixée sur le câble moteur (16) et que la griffe (28) du bras à griffe (26) est en prise avec cette surface de contre-appui (22).

15. Rétracteur de ceinture selon une ou plusieurs des revendications 1 à 13, caractérisé par le fait qu'il est prévu sur la périphérie de la couronne dentée (5) ou de la poulie à câble (4) un élément de contre-appui (85) sur lequel s'accroche la griffe (84) du bras à griffe (83) (figures 6, 7, 9).

16. Rétracteur de ceinture selon une ou plusieurs des revendications 1 à 13 et 15, caractérisé par le fait que la surface de contre-appui (85) pour l'encliquetage avec la griffe (84) du bras à griffe (83) est aménagée sur une tige d'arrêt fixée sur la périphérie du mécanisme d'arrêt (14) ou sur une saillie ou sur une dent.

17. Rétracteur de ceinture selon une ou plusieurs des revendications 1 à 16, caractérisé par le fait que le système à leviers se compose d'un premier levier (27, 82) portant le bras à griffe (26, 83) et d'un levier de verrouillage (31, 81) et que ces leviers coopèrent l'un avec l'autre par l'intermédiaire de saillies (29, 30; 87) en forme de cames.
